# EUROPEAN PATENT SPECIFICATION

(11) **EP 4 297 372 B1**
(45) Date of publication and mention of the grant of the patent: **16.07.2025**
(21) Application number: 22180136.8
(22) Date of filing: 21.06.2022
(51) Int. Cl.: H04L 67/12, H04L 69/14, H04W 72/0453, H04W 72/54, H04W 72/02

(54) **METHOD FOR MANAGING MESSAGE TRANSMISSIONS BETWEEN VEHICLE AND OFF-BOARD SYSTEM**
VERFAHREN ZUR VERWALTUNG VON NACHRICHTENÜBERTRAGUNGEN ZWISCHEN EINEM FAHRZEUG UND EINEM OFF-BOARD-SYSTEM
PROCÉDÉ DE GESTION DES TRANSMISSIONS DE MESSAGES ENTRE UN VÉHICULE ET UN SYSTÈME NON TRANSPORTÉ

(43) Date of publication of application: 27.12.2023
(73) Proprietor: VOLVO TRUCK CORPORATION, 405 08 Göteborg (SE)
(72) Inventor: SHIRE, Joshua, 411 39 Göteborg (SE)
(74) Representative: Valea AB

(56) References cited:
- CN-A- 107 889 161
- CN-A- 109 302 709
- CN-A- 112 529 424
- US-A1- 2012 163 255
- US-A1- 2017 086 230
- US-A1- 2019 312 815

## Description

### TECHNICAL FIELD

The disclosure relates generally to communications between a vehicle and an off-board system. In particular aspects, they relate to managing message transmissions between a vehicle and an off-board system over different communication channels in a system comprising e.g. a Vehicular Disruption Tolerant Network.

The disclosure can be applied in heavy-duty vehicles, such as trucks, buses, and construction equipment. Although the disclosure will be described with respect to a particular vehicle, the disclosure is not restricted to any particular vehicle.

### BACKGROUND

At vehicle industries, it is typically to use messaging protocol to cause remote vehicle configuration changes or to retrieve data from a vehicle. The messaging protocol may be managed by a back-office systems (BOS) or an off-board system (OBS) and messages, e.g. configuration messages, application messages, are transmitted to the vehicle using service routing protocol over wireless transport protocol over a communication channel. the service routing protocol defines which process should receive the message at a receiving node. The wireless transport protocol defines how a message should be segmented and which communication channels a message shall be transmitted over. Right now, Short Message Service (SMS) and cellular Packet Data Network (PDN) connectivity, e.g. Internet Protocol (IP) over a mobile network, are used by most of vehicle industries for communications between a vehicle and an off-board system. The PDN utilizes high throughput cellular connectivity to allow its end-users to access and push & pull digital-data as needed per application. The mobile network may be any wireless system or cellular network, such as a Long Term Evolution (LTE) network, a 3rd Generation Partnership Project (3GPP) cellular network, an LTE advanced or Fourth Generation (4G) network, a Fifth Generation (5G) or New Radio (NR) network etc.

There is a trend to use a non-IP based satellite system for communications between a vehicle and an off-board system. The satellite channel may have extremely high cost, much lower throughput and is extremely intermittent. However, the availability of this communication channel tends to be much greater in mid latitudes compared to the cellular communication systems.

Messages transmitted via the wireless transport protocol over a communication channel will frequently be segmented into smaller fragments. The time required for a complete message to be received by the back-office systems is the convergence time of all smaller fragments, and the cost of delivering these messages can be considered as the convergence cost.

Different communication channels have different costs, transfer rates, throughputs latencies, path loss ratios, inter-packet delay variations etc. How to manage logical queues of the available communication channels, both at back-office and on the vehicle, to opportunistically take advantages of different channels to improve convergence time and reduce convergence cost will be an important issue to deal with for the vehicle industries.

It seems to be a trend where a lot of works are put in either at the device level to optimize queue management to maximum overall throughput or reduce message loss, or at the network level within the routing domain to reduce convergence time by increasing or decreasing the number of copies of a message or opportunistically passing copies over different channels to improve the overall system performance.

Recently, Delay or Disruption Tolerant Networks (DTNs) have been utilized in various operational communication paradigms. DTN is a network architecture that reduces intermittent communication issues by addressing technical problems in heterogeneous networks that lack continuous connectivity. DTN is an end-to-end architecture providing communications in and/or through highly stressed environments. Stressed networking environments include those with intermittent connectivity, large and/or variable delays, and high bit error rates. RFC5050, bundle protocol specification, is the current end-to-end protocol endorsed by the Internet Engineering Task Force (IETF) for use on DTNs. In "Queue-Management Architecture for Delay Tolerant Networking" published at https://www.researchgate.net/publication/221138089, it is noted that "DTN nodes need additional persistent storage to maintain those packets that cannot immediately be forwarded due to limited connectivity". This is the present strategies for dealing with queue management in DTN nodes. A basic model for buffer and storage management is presented, which is controlled by a policy unit. However, the treatment of the buffer and storage model seems focused on the modem itself and misses the larger picture of the operating system. From perspective of the operating system of the node, the situation is different. A main policy unit, e.g. a send policy unit, interacts with a modem buffer, but this buffer is in fact a persistent queue and used whether or not there is connectivity at the time. The modem itself also has a policy unit which acts upon the priority setting of the submitted message. The policy unit on the modem however does not set the priority, it just interacts with the priority setting provided by the main policy unit. Further, it is the main policy unit which will remove messages from the modem queue when acknowledged or expired and push new messages into this queue when memory is available.

### SUMMARY

As a part of developing embodiments herein, problems and limitations in the communication between a vehicle and an offboard system will further be discussed. Since it is dealing with vehicles, it is probable that a vehicle will transition between different networks coverages, e.g. between a cellular network coverage and a satellite coverage from time to time. That is a vehicle may be fixed at a location for some time, but then may be moved to another location. Due to the incredibly low throughput of a satellite communication channel, it is possible that messages which were previously queued for transmission via the satellite communication channel will still have not been transmitted when the vehicle finds it has a cellular connection available and makes the connectivity status known to the back-office system. There is no mention of how to manage buffered messages across different communications channels in prior arts. As discussed in the background, different communication channels have different costs, transfer rates, throughputs latencies, path loss ratios, inter-packet delay variations etc. There are no discussions on how to manage logical queues of the available communication channels, both at the back-office and on the vehicle, to opportunistically take advantages of different channels to improve convergence time and reduce convergence cost in prior arts.

It is therefore an object of embodiments herein to provide a method for managing message transmissions between a vehicle and an off-board system over different communications channels to improve convergence time and reduce convergence cost for segmented messages.

According to an aspect of the disclosure, the object is achieved by an onboard electronic control unit comprised in a vehicle and method therein for managing message transmissions between the vehicle and an off-board system. The onboard electronic control unit in the vehicle communicates a first fragment of a message between the vehicle and the off-board system via a first communication channel. The first communication channel has a first throughput, a first transfer rate, a first latency, a first path loss ratio, and a first inter-packet delay variation. The onboard electronic control unit in the vehicle detects availability of a second communication channel. The second communication channel has at least one of a second throughput higher than the first throughput, a second transfer rate greater than the first transfer rate, a second latency less than the first latency, a second path loss ratio less than the first path loss ratio, or a second inter-packet delay variation less than the first inter-packet delay variation. The onboard electronic control unit in the vehicle then communicates a second fragment of the message between the vehicle and the off-board system via the second communication channel.

By communicating a second fragment of the message between the vehicle and the off-board system via the second communication channel which is a preferred channel having either of lower latency, lower path loss ratio, less inter-packet delay variation, higher throughput, higher transfer rate etc. compared to the first communication channel, the convergence time and convergence cost for segmented messages will be reduced.

In certain examples, the onboard electronic control unit in the vehicle may transmit a notification to the off-board system to notify that the second communication channel is available to use. Hereby, a technical effect includes making the off-board system aware of a more preferred channel is now available and enabling the off-board system to communicate messages over the preferred channel and manage its message queue. If there are message fragments placed in a non-preferred channel queue, the off-board system can remove the fragments from the queue and resubmit them to the preferred channel queue. In this way, the convergence time and convergence cost for segmented messages will be reduced.

In certain examples, the onboard electronic control unit in the vehicle may determines at least one message or one fragment of a message that is queued for transmission over the first communication channel based on segmentation information of the queued messages. The segmentation information of the queued messages comprises whether a message is segmented, and if a message is segmented and how many fragments of a message that is segmented into. By knowing whether all the fragments of a segmented message have been transmitted, the message queues for all available channels can be managed by the onboard electronic control unit in the vehicle based on the segmentation information for messages on that channel. The onboard electronic control unit in the vehicle may remove the fragments from the message queue of a non-preferred channel and resubmit them to the preferred channel queue.

According to another aspect of the disclosure, the object is achieved by an off-board system and method therein for managing message transmissions between a vehicle and the off-board system. The off-board system transmits a first fragment of a message to the vehicle via a first communication channel and receive a notification from the vehicle indicating that a second communication channel is available to use. The off-board system manages message queues by moving a second fragment of the message from the queue of messages for transmission via the first communication channel to the queue of messages for transmission via the second communication channel and transmits the second fragment of a message to the vehicle via the second communication channel.

By receiving a notification from the vehicle indicating that a second communication channel is available to use, a preferred channel having either of lower latency, lower path loss ratio, less inter-packet delay variation, higher throughput, higher transfer rate etc. compared to the first communication channel, can be used by the off-board system to transmit fragments of a message to the vehicle, thereby the convergence time and convergence cost for a segmented message with one or more fragments will be reduced.

Additional features and advantages are disclosed in the following description, claims, and drawings, and in part will be readily apparent therefrom to those skilled in the art or recognized by practicing the disclosure as described herein. There are also disclosed herein control units, computer readable media, and computer program products associated with the above discussed technical effects and corresponding advantages

### BRIEF DESCRIPTION OF THE DRAWINGS

With reference to the appended drawings, below follows a more detailed description of aspects of the disclosure cited as examples.
Fig. 1 (a) is a schematic block diagram showing an exemplary communication system in which embodiments herein may be implemented; (b) and (c) show example characteristics of a first and second communication channels; (d) shows a segmented message;
Fig. 2 (a)-(c) are message sequence diagrams; (d)-(f) are flow charts showing methods performed by an onboard electronic control unit in a vehicle according to some examples;
Fig. 3 is a flow chart showing a method performed by an off-board system according to one example;
Fig. 4 is a block diagram showing an onboard electronic control unit in a vehicle according to one example;
Fig. 5 is a block diagram showing an off-board system according to one example; and
Fig. 6 is a schematic diagram of an exemplary computer system for implementing examples disclosed herein, according to one example.

### DETAILED DESCRIPTION

The embodiments set forth below represent the necessary information to enable those skilled in the art to practice the embodiments and illustrate the best mode of practicing the embodiments.

The terminology used herein is for the purpose of describing particular embodiments only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

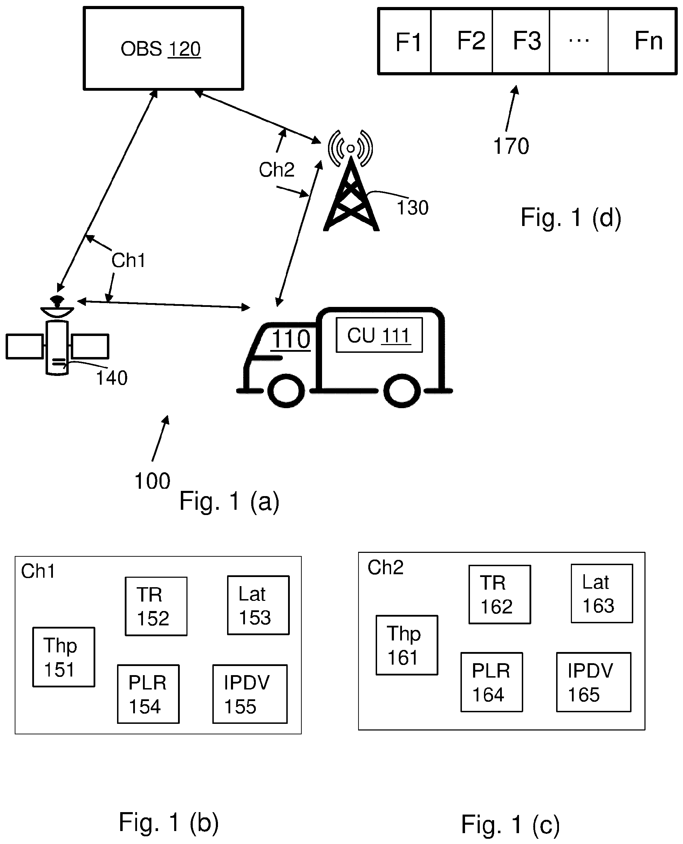

**Fig.1(a)** shows an exemplary communication system **100** in which communications between a vehicle **110** and an off-board system **120** occur. The communication system 100 may comprise multiple communication networks, where a wireless cellular communication network, e.g. a 3G cellular network, an LTE network, an LTE advanced or a 4G network, a 5G or NR network, indicated by a base station **130,** and a satellite communication network indicated by a satellite **140** are shown.

The vehicle 110 comprises an onboard electronic control unit **CU 111** which is responsible for onboard and offboard communication. The vehicle 110 may be connected to other vehicles and to the off-board system 120 via a telematics system. A telematics system includes a vehicle tracking device which may be installed in a vehicle that allows sending, receiving and storing of data. The telematics system connects via the vehicle's own onboard diagnostics (ODB) or a Controller Area Network Bus (CAN-BUS) port with a subscriber identification module (SIM) card, and an onboard modem enables communication through a communication network, e.g. the cellular communication network 130 or satellite communication network 140, to the off-board system 120.

The onboard electronic control unit 111 may be a part of Telematics Gateway Unit (TGU), with e.g. a telematics gateway version 3 (TGW3) in the telematics system. The TGW3 uses messaging protocol over service routing protocol over wireless transport protocol to transmit application messages over a communication network. The onboard electronic control unit 111 may comprise a Global Positioning System (GPS) receiver, along with an onboard modem with mobile communication ability, e.g. General Packet Radio Service (GPRS), Enhanced Data rates for GSM Evolution (EDGE), Wi-Fi, 3G, 5G, NR etc. Additionally, the onboard electronic control unit 111 may have ethernet, universal serial bus (USB) and Recommended Standard 232 (RS232) ports enable a multitude of peripherals and accessories to be connected to the TGU.

Traditional networks such as the wireless cellular communication network 130 supposes the existence of some paths between end-points, short end-to-end round-trip delay time and small loss ratio. Today, however, new applications, environments and types of devices are challenging these assumptions. In DTNs an end-to-end path from a source to a destination may not exist. In this environment, nodes can still connect and exchange information, but in an opportunistic way. DTNs have been developed as an approach to building architecture models which are tolerant to long delays and/or disconnected when delivering data to destinations. The Vehicular DTN (VDTN) research, have attracted great attention in the last few years. Vehicles equipped with wireless devices will exchange trac and road safety information with nearby vehicles, roadside units and/or off-board systems. Traditionally nodes are considered to be fixed, energy unconstrained, connected by low loss rate links, and communication occurs through the exchange of data between two or more nodes. Today, however, new applications, environments and types of devices are challenging these assumptions and call for new architectures and modes of node operation. Some of these challenges are intermittent and/or scheduled links, very large delays, high link error rates, energy-constrained devices, with heterogeneous underlying network architectures and protocols in a protocol stack, and most importantly, the absence of an end-to-end path from a source to a destination. Applications on the following environments may pose such challenges, e.g. spacecrafts, military/tactical, disaster response, mobile sensors, vehicular environments, satellite and various forms of large scale ad hoc networks.

Therefore, there are both preferred and non-preferred communication channels between the vehicular 110 and off-board system 120 regarding characteristics of a channel such as throughput, transfer rate, latency, path loss ratio, inter-packet delay variation etc. For example, a first communication channel **Ch1** between the vehicular 110 and off-board system 120 in the satellite communication network 140 may have higher cost, lower throughput and higher latency and may have period of complete disconnection compared to a second communication channel **Ch2** in a cellular network 130 which may have lower cost and higher throughput. Some example characteristics of the first and second channels Ch1, Ch2 are shown in **Fig. 1(b)** and (c), such as throughput **Thp 151/161,** transfer rate **TR 152/162,** latency **Lat 153/163,** path loss ratio **PLR 154/164,** inter-packet delay variation **IPDV 155/165** etc. Throughput Thp 151/161 is the rate of message delivery over a single channel. Throughput may show its results as an average and uses "data units per time" metrics such as bits per second "bps" or packets per second "pps". Transfer rate TR 152/162 is the speed of data transfer through a channel. Latency Lat 153/163 is a measure of responsiveness of a channel. Path loss ratio PLR 154/164 is the ratio of the transmitted power to the received power over a channel. Inter-packet delay variation IPDV 155/165 measures the variation in delay of uni-directional, consecutive packets, e.g. packet 1 and 2, 2 and 3 etc. which flow between two units over a channel. Low IPDV is especially important for applications requiring timely delivery of packets.

As described in the background, messages transmitted over a communication channel will frequently be segmented into smaller fragments. **Fig. 1 (d)** is a schematic diagram showing a message sequence **170** where the message is segmented to several fragments **F1, F2, ...Fn.** The time required for a complete message 170 to be received by the off-board system 120 is the convergence time of all smaller fragments F1, F2, ...Fn, and the cost of delivering these fragments F1, F2, ...Fn can be considered as the convergence cost.

According to the disclosure, to reduce the convergence time and cost of delivering a segmented message, a mechanism for managing message transmissions and message queues for all available channels is developed and implemented both in the off-board system 120 and the on-board control unit CU 111 in the vehicle 110.

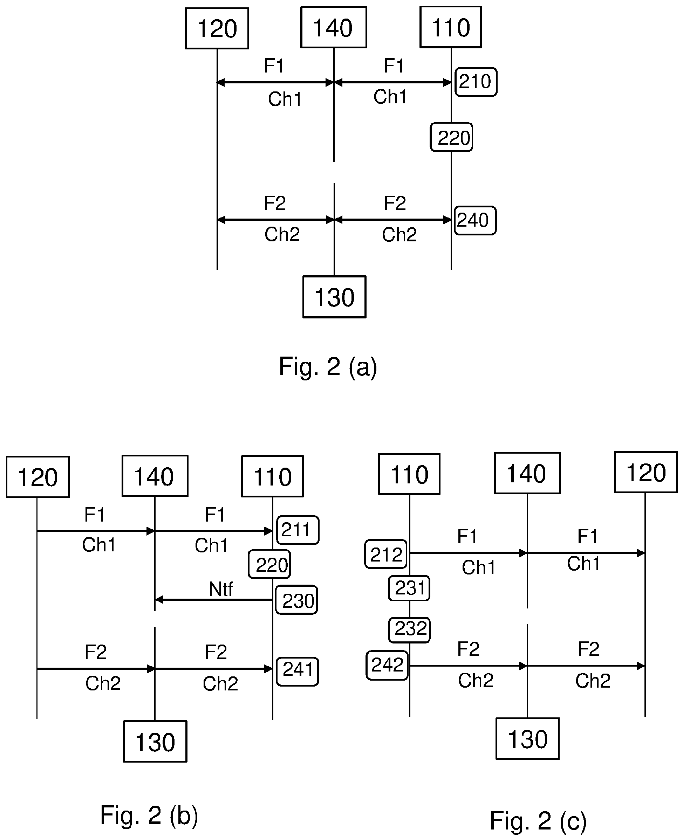

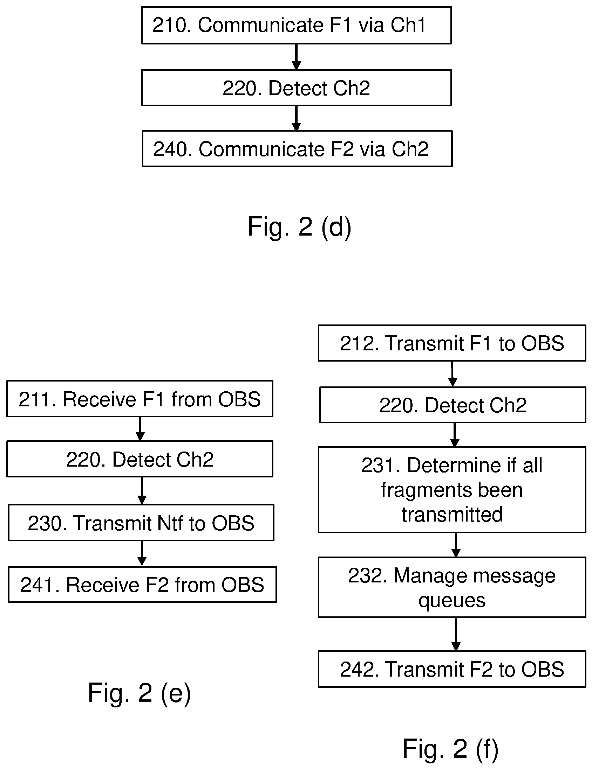

A method performed by the onboard electronic control unit 111 in the vehicle 110 for managing message transmissions between the vehicle 110 and off-board system 120 will be described in detail with reference to Fig. 2 (a)-(f), where Fig. 2 (a)-(c) are message sequence diagrams between the vehicle 110 and off-board system 120, and Fig. 2 (d)-(f) are flow charts of the methods performed by the onboard electronic control unit 111 in the vehicle 110 according some examples. The method comprises the following actions.

### Action 210

When messages need to be communicated between the vehicle 110 and off-board system 120, and the preferred channels are not available, it will cause both the vehicle 110 and off-board system 120 to deliver messages via the non-preferred channel.

The vehicle 110 and off-board system 120 communicates a first fragment F1 of a message 170 via a first communication channel Ch1. As shown in Fig. 2(a), the first communication channel Ch1 is the communication channel between the vehicular 110 and off-board system 120 via the satellite communication network 140. The first communication channel Ch1 has a first throughput 151, a first transfer rate 152, a first latency 153, a first path loss ratio 154, and a first inter-packet delay variation 155. The first communication channel Ch1 in this case is a non-preferred channel.

When messages need to be communicated between the vehicle 110 and off-board system 120, the vehicle 110 or off-board system 120 may take a simple retry scheme, wherein the more preferred channels are tried first until the messages time out. Then the messages are placed in a message queue of a non-preferred channel. The vehicle 110 or off-board system 120 may also take an active system where the availability of each communication channel is known and the most preferred, available channel is selected when the message is to be submitted. Only if no preferred channel is available or the message times out in a preferred channel queue, then the message is placed in the queue of the non-preferred channel.

The communication between the vehicle 110 and off-board system 120 via the first communication channel Ch1 may comprise the following actions:

### Action 211

As shown in Fig. (b) and (e), the vehicle 110 may receive the first fragment F1 of the message 170 from the off-board system 120 via the first communication channel Ch1.

### Action 212

As shown in Fig. (c) and (f), the vehicle 110 may transmit the first fragment F1 of the message to the off-board system 120 via the first communication channel Ch1.

During either receiving or transmitting messages from or to the off-board system 120 via the first communication channel Ch1, the vehicle 110 continuously detects the availability of other communication channels, as described in the following action.

### Action 220

The onboard electronic control unit 111 in the vehicle 110 detects availability of a second communication channel Ch2. The second communication channel Ch2 in this case is a preferred channel which has at least one of a second throughput 161 higher than the first throughput 151, a second transfer rate 162 greater than the first transfer rate 152, a second latency 163 less than the first latency 153, a second path loss ratio 164 less than the first path loss ratio 153, or a second inter-packet delay variation 165 less than the first inter-packet delay variation 155.

The availability of a second communication channel Ch2 may be detected by the onboard modem connected to the second communication channel which will inform the operating system when the channel is up and connected. For the case of LTE, that will be when a Point-to-Point Protocol (PPP) connection to the PDN Gateway (P-GW) is up and the layer 3 interface is available. This may be via a callback or polling the modem control interface. Depends on the communication between the vehicle 110 and off-board system 120 is receiving or transmitting the messages from or to the off-board system 120, the following actions may be performed.

In certain examples, when the communication between the vehicle 110 and off-board system 120 via the first communication channel Ch1 is that the vehicle 110 receives, as in Action 211, the first fragment F1 of the message from the off-board system 120 via the first communication channel Ch1, the method may further comprise the following actions.

### Action 230

As shown in Fig. 2(b) and (e), the onboard electronic control unit 111 in the vehicle 110 may transmit a notification **Ntf** to the off-board system 120 to notify that the second communication channel Ch2 is available to use. That is when the vehicle 110 is receiving messages from the off-board system 120 and finds that now there is a more preferred channel available to it, the vehicle 110 sends a notification to the offboard system 110 so that the offboard system 110 can transmit a second fragment F2 of the message using the preferred channel in case of a segmented message where not all of the fragments have been transmitted. The offboard system 110 may transmit the rest of fragments F3, ...Fn or the rest of messages via the second communication channel Ch2 during the available period.

A new message may be specified which will indicate that a preferred channel is available. This may be implemented as a new JavaScript Object Notation (JSON) based "Extended Communication" in the messaging protocol. Therein it will additionally define:
- An anti-flapping mechanism where the following parameters shall be remotely configurable:
   a) A maximum number of notifications;
   b) The interval for which the maximum number of notifications applies, e.g. maximum 3 notification over 1 hour.
- In case of flapping, a mute mechanism where the vehicle 110 can be configured to cease sending available channel notifications for a definable period.

Therefore, according to some examples, the vehicle 110 may send a maximum number of notifications during an interval. The maximum number of notifications and interval may be configurable. This is to avoid the vehicle 110 flaps between two channels, i.e. switches channels back and forth too often or in too short period.

According to some examples, when the communication between the vehicle 110 and off-board system 120 via the first communication channel Ch1 is that the vehicle 110 transmits the first fragment F1 of the message 170 to the off-board system 120 via the first communication channel Ch1, as in Action 212 shown in Fig.2 (c) and (f), the method may further comprise the following actions.

### Action 231

In order to manage the message queues for all available communication channels, the vehicle 110 should be aware of the segmentation information for messages on that channel, and whether or not all the fragments of a segmented message have been transmitted. Therefore, according to some examples, the onboard electronic control unit 111 in the vehicle 110 may determine at least one message or one fragment e.g. F2, ...Fn, of a message 170 that is queued for transmission over the first communication channel Ch1 based on segmentation information of the queued messages. The segmentation information of the queued messages comprises whether a message is segmented, and if a message is segmented and how many fragments of a message that is segmented into.

### Action 232

The onboard electronic control unit 111 in the vehicle 110 manage the message queues. The onboard electronic control unit 111 in the vehicle 110 moves a second fragment F2 of the message 170 from a first queue of messages for transmission via the first communication channel Ch1 to a second queue of messages for transmission via the second communication channel Ch2. That is when the vehicle 110 is transmitting messages to the off-board system 120 and finds that now there is a more preferred channel available to it, and having placed items, e.g. fragments of a message, other non-fragmented messages etc. in a message queue of the non-preferred channel, will remove them from the first queue of messages for transmission via the first communication channel Ch1 and place them in the message queue of the preferred channel, i.e. the second queue of messages for transmission via the second communication channel Ch2. The onboard electronic control unit 111 in the vehicle 110 may manage the message queues for all available communication channels.

### Action 240

After the second communication channel Ch2 is detected to be available, the vehicle 110 and off-board system 120 communicates a second fragment F2 of the message 170 via the second communication channel Ch2, i.e. over the preferred channel.

The communications between the vehicle 110 and off-board system 120 via the second communication channel Ch2 may comprise the following actions:

### Action 241

In case the vehicle 110 receives, as in Action 211, the first fragment F1 of the message 170 from the off-board system 120 via the first communication channel Ch1, the vehicle 110 now receives the second fragment F2 of the message 170 from the off-board system 120 via the second communication channel Ch2. The vehicle 110 may receive the rest of fragments F3... Fn or the rest of messages via the second communication channel Ch2 during the available period.

### Action 242

In case the vehicle 110 transmits, as in Action 212, the first fragment F1 of the message 170 to the off-board system 120 via the first communication channel Ch1, the vehicle 110 now transmits the second fragment F2 of the message 170 via the second communication channel Ch2. The vehicle 110 may transmit the rest of fragments F3,... Fn or the rest of messages via the second communication channel Ch2 during the available period.

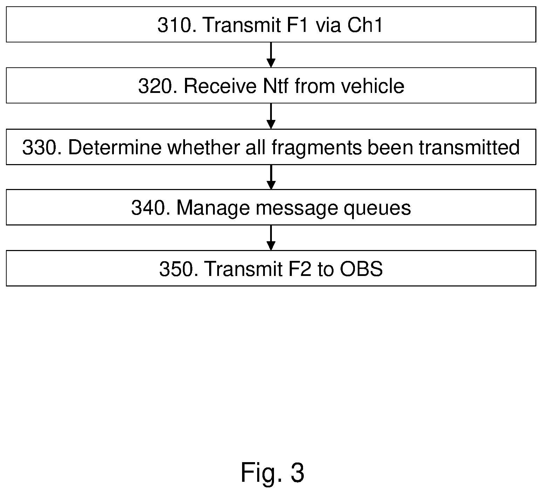

A method performed by the off-board system 120 for managing message transmissions between the vehicle 110 and the off-board system 120 will be described in detail with reference to **Fig.3****.** The method comprises the following actions.

### Action 310

As discussed above, when messages between the vehicle 110 and off-board system 120 needs to communicate, and the preferred channels are not available, it will cause both the vehicle 110 and off-board system 120 to deliver messages via the non-preferred channel. In this case, the off-board system 120 transmits a first fragment F1 of a message 170 to the vehicle 110 via a first communication channel Ch1. The first communication channel Ch1 is a non-preferred channel having a first throughput 151, a first transfer rate 152, a first latency 153, a first path loss ratio 154, and a first inter-packet delay variation 155.

### Action 320

The off-board system 120 receives a notification Ntf from the vehicle 110 indicating that a second communication channel Ch2 is available to use. The second communication channel Ch2 in this case is a preferred channel which has at least one of a second throughput 161 higher than the first throughput 151, a second transfer rate 162 greater than the first transfer rate 152, a second latency 163 less than the first latency 152, a second path loss ratio 164 less than the first path loss ratio 154, or a second inter-packet delay variation 165 less than the first inter-packet delay variation 155.

### Action 330

When the off-board system 120 receives the notification Ntf from the vehicle 110 that a preferred channel is now available, the off-board system 120 manages the message queues. In order to manage the message queues for all available communication channels, the off-board system 120 should be aware of the segmentation information for messages on that channel, and whether or not all the fragments of a segmented message have been transmitted. Therefore, according to some examples, the off-board system 120 determines at least one message or one fragment of a message that is queued for transmission over the first communication channel Ch1 based on segmentation information of the queued messages. The segmentation information of the queued messages comprises whether a message is segmented, and if a message is segmented and how many fragments of a message that is segmented into.

### Action 340

When it is determined that it has placed items, e.g. fragments of a message, other non-fragmented messages etc., in a message queue of the non-preferred channel, the offboard system shall remove them from the message queue of the non-preferred channel and place them in a message queue of the preferred channel. Therefore, according to some examples, the off-board system 120 manage message queues by moving a second fragment F2 of the message 170 from the queue of messages for transmission via the first communication channel Ch1 to the queue of messages for transmission via the second communication channel Ch2 in case of a message that has been segmented where not all of the message fragments have been transmitted.

### Action 350

The off-board system 120 transmits the second fragment F2 of a message 170 to the vehicle 110 via the second communication channel Ch2. The off-board system 120 may transmit the rest of fragments F3,... Fn or the rest of messages via the second communication channel Ch2 during the available period.

According to some examples, both the vehicle 110 and the off-board system 120 shall be agnostic to the channels that message segments are received over and shall support reassembling a message from segments received over a variety of channels. As previously mentioned, this is primary achieved by managing the queues and reassembly at the layer above the network layer, which is a current component of RFC5050 will be adopted. It is important that the application layer message segmentation is managed at the node level, and not at the convergence layer or network level or else reassembly after a channel switch will be very difficult.

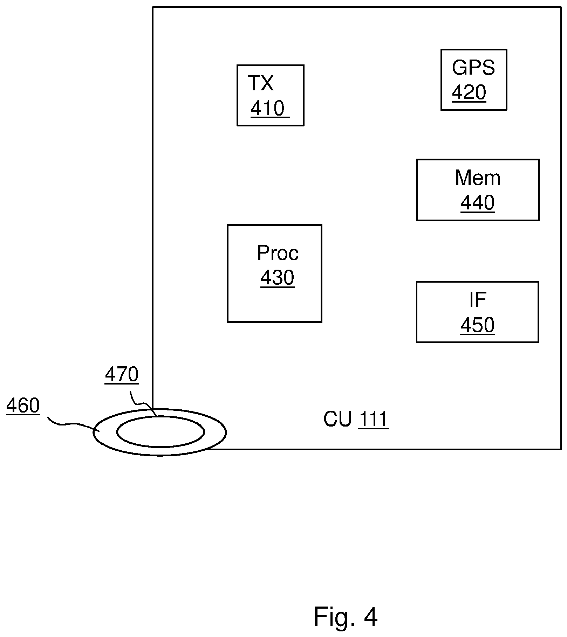

**Fig. 4** shows a schematic blook diagram of an onboard electronic control unit CU 111 comprised in a vehicle 110. To perform the method for managing message transmissions between the vehicle 110 and an off-board system 120, the onboard electronic control unit CU 111 comprises an onboard modem, e.g. a transceiver module TX **410** for communicating with the off-board system 120 or communicating with different units, modules, apparatus in the vehicle 110, a GPS receiver **420** for positioning service, a processor Proc **430** for processing message, data or information. The onboard electronic control unit 111 may comprises other circuit/units, such as one or more memory Mem **440** and may be used to store received messages, parameters, configurations, instructions and applications etc. to perform the method herein when being executed in the onboard electronic control unit 111. Additionally, the onboard electronic control unit CU 111 may comprise other interfaces or ports IF **450** e.g. ethernet, USB and RS232 ports etc.

The method according to embodiments herein may be implemented through one or more processors, such as the processor 430 together with computer program code for performing the functions and actions of the embodiments herein. The program code mentioned above may also be provided as a computer program product, for instance in the form of a data carrier **460** carrying computer program code **470,** as shown in Fig.4, for performing the embodiments herein when being loaded into the onboard electronic control unit 111. One such carrier may be in the form of a CD ROM disc. It is however feasible with other data carriers such as a memory stick. The computer program code may furthermore be provided as pure program code on a server or a cloud and downloaded to onboard electronic control unit 111.

The onboard electronic control unit 111 is configured to, by means of e.g. the transceiver module 410 being configured to, communicate a first fragment F1 of a message 170 between the vehicle 110 and the off-board system 120 via a first communication channel Ch1. The first communicating channel Ch1 may have a first throughput 151, a first transfer rate 152, a first latency 153, a first path loss ratio 154, and a first inter-packet delay variation 155.

The onboard electronic control unit 111 is configured to, by means of e.g. the transceiver module 410 being configured to, detect availability of a second communication channel Ch2. The second communication channel Ch2 may have at least one of a second throughput 161 higher than the first throughput 151, a second transfer rate 162 greater than the first transfer rate 152, a second latency less 163 than the first latency 153, a second path loss ratio 164 less than the first path loss ratio 154, or a second inter-packet delay variation 165 less than the first inter-packet delay variation 155.

The onboard electronic control unit 111 is configured to, by means of e.g. the transceiver module 410 being configured to, communicate a second fragment F2 of the message 170 between the vehicle 110 and the off-board system 120 via the second communication channel Ch2.

According to some examples, the onboard electronic control unit 111 may be configured to, by means of e.g. the transceiver module 410 being configured to, receive the first fragment F1 of the message from the off-board system 120; transmit a notification Ntf to the off-board system 120 to notify that the second communication channel Ch2 is available to use; and receive the second fragment F2 of the message 170 from the off-board system 120 via the second communication channel Ch2.

According to some examples, the onboard electronic control unit 111 may be configured to, by means of e.g. the transceiver module 410 being configured to, transmit, the first fragment F1 of the message 170 to the off-board system 120, manage message queues by moving a second fragment F2 of the message from a first queue of messages for transmission via the first communication channel Ch1 to a second queue of messages for transmission via the second communication channel Ch2, and transmit the second fragment F2 of the message 170 via the second communication channel Ch2.

According to some examples, the onboard electronic control unit 111 may be configured to, by means of e.g. the processor 430 being configured to, determine at least one message or one fragment F2, F3,... Fn of a message 170 that is queued for transmission over the first communication channel Ch1 based on segmentation information of the queued messages.

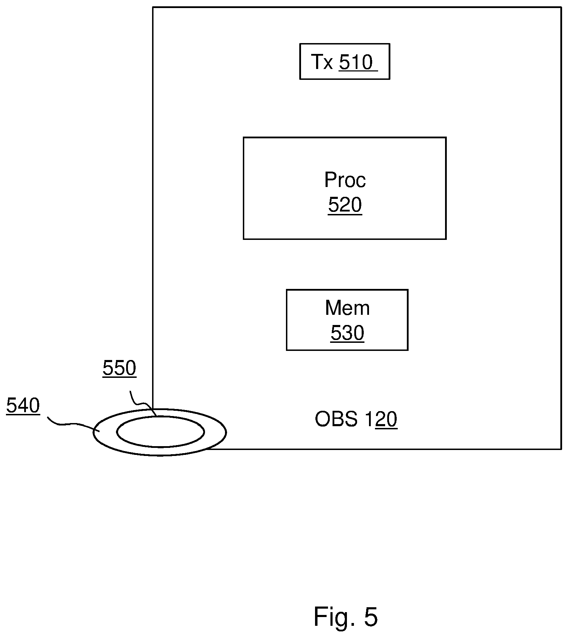

**Fig. 5** shows a schematic blook diagram of an offboard system 120. To perform the method for managing message transmissions between the vehicle 110 and the off-board system 120, the off-board system 120 comprises a transceiver module TX **510** for communicating with the vehicle 110, a processor Proc **520** for processing message, data or information. The off-board system 120 may comprises other circuit/units, such as one or more memory Mem **530** and may be used to store received messages, parameters, configurations, and instructions etc. to perform the method herein when being executed in the off-board system 120.

The method according to embodiments herein may be implemented through one or more processors, such as the processor 520 together with computer program code for performing the functions and actions of the embodiments herein. The program code mentioned above may also be provided as a computer program product, for instance in the form of a data carrier **540** carrying computer program code **550,** as shown in Fig.5, for performing the embodiments herein when being loaded into the off-board system 120. One such carrier may be in the form of a CD ROM disc. It is however feasible with other data carriers such as a memory stick. The computer program code may furthermore be provided as pure program code on a server or a cloud and downloaded to the off-board system 120.

The off-board system 120 is configured to, by means of e.g. the transceiver model 510 being configured to, transmit a first fragment F1 of a message 170 to the vehicle 110 via a first communication channel Ch1; receive a notification Ntf from the vehicle 110 indicating that a second communication channel Ch2 is available to use; manage message queues by moving a second fragment F2 of the message 170 from the queue of messages for transmission via the first communication channel Ch1 to the queue of messages for transmission via the second communication channel Ch2; and transmit the second fragment F2 of a message 170 to the vehicle 110 via the second communication channel Ch2.

The off-board system 120 may be further configured to determine at least one message or one fragment F2, F3... Fn of a message 170 that is queued for transmission over the first communication channel Ch1 based on segmentation information of the queued messages.

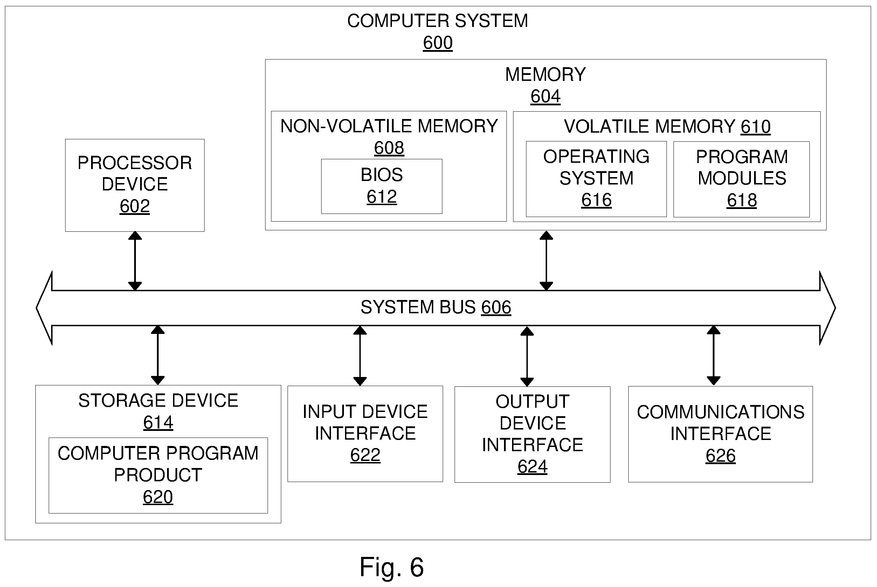

**Fig. 6** is a schematic diagram of a computer system **600** for implementing examples disclosed herein. The computer system 600 is adapted to execute instructions from a computer-readable medium to perform these and/or any of the functions or processing described herein. The computer system 600 may be connected (e.g., networked) to other machines in a LAN, an intranet, an extranet, or the Internet. While only a single device is illustrated, the computer system 600 may include any collection of devices that individually or jointly execute a set (or multiple sets) of instructions to perform any one or more of the methodologies discussed herein. Accordingly, any reference in the disclosure and/or claims to a computer system, computing device, control system, control unit, electronic control unit (ECU), processor device, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 600 may comprise a computing device or electronic device capable of including firmware, hardware, and/or executing software instructions to implement the functionality described herein. The computer system 600 includes a processor device **602** (may also be referred to as a control unit), a memory **604,** and a system bus **606.** The system bus 606 provides an interface for system components including, but not limited to, the memory 604 and the processor device 602. The processor device 602 may include any number of hardware components for conducting data or signal processing or for executing computer code stored in memory 604. The processor device 602 (e.g., control unit) may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processor device may further include computer executable code that controls operation of the programmable device.

The system bus 606 may be any of several types of bus structures that may further interconnect to a memory bus (with or without a memory controller), a peripheral bus, and/or a local bus using any of a variety of bus architectures. The memory 604 may be one or more devices for storing data and/or computer code for completing or facilitating methods described herein. The memory 604 may include database components, object code components, script components, or other types of information structure for supporting the various activities herein. Any distributed or local memory device may be utilized with the systems and methods of this description. The memory 604 may be communicably connected to the processor device 602 (e.g., via a circuit or any other wired, wireless, or network connection) and may include computer code for executing one or more processes described herein. The memory 604 may include non-volatile memory **608** (e.g., read-only memory (ROM), erasable programmable read-only memory (EPROM), electrically erasable programmable read-only memory (EEPROM), etc.), and volatile memory **610** (e.g., random-access memory (RAM)), or any other medium which can be used to carry or store desired program code in the form of machine-executable instructions or data structures and which can be accessed by a computer or other machine with a processor device 602. A basic input/output system (BIOS) **612** may be stored in the non-volatile memory 608 and can include the basic routines that help to transfer information between elements within the computing device 600.

The computing device 600 may further include or be coupled to a non-transitory computer-readable storage medium such as the storage device **614,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 614 and other drives associated with computer-readable media and computer-usable media may provide non-volatile storage of data, data structures, computer-executable instructions, and the like.

A number of modules can be implemented as software and/or hard-coded in circuitry to implement the functionality described herein in whole or in part. The modules may be stored in the storage device 614 and/or in the volatile memory 610, which may include an operating system **616** and/or one or more program modules **618.** All or a portion of the examples disclosed herein may be implemented as a computer program product **620** stored on a transitory or non-transitory computer-usable or computer-readable storage medium (e.g., single medium or multiple media), such as the storage device 614, which includes complex programming instructions (e.g., complex computer-readable program code) to cause the processor device 602 to carry out the steps described herein. Thus, the computer-readable program code can comprise software instructions for implementing the functionality of the examples described herein when executed by the processor device 602. The processor device 602 may serve as a controller, or control system, for the computing device 600 that is to implement the functionality described herein.

The computer system 600 also may include an input device interface **622** (e.g., input device interface and/or output device interface). The input device interface 622 may be configured to receive input and selections to be communicated to the computer system 600 when executing instructions, such as from a keyboard, mouse, touch-sensitive surface, etc. Such input devices may be connected to the processor device 602 through the input device interface 622 coupled to the system bus 606 but can be connected through other interfaces such as a parallel port, an Institute of Electrical and Electronic Engineers (IEEE) 1394 serial port, a Universal Serial Bus (USB) port, an IR interface, and the like. The computer system 600 may include an output device interface **624** configured to forward output, such as to a display, a video display unit (e.g., a liquid crystal display (LCD) or a cathode ray tube (CRT)). The computing device 600 may also include a communications interface **626** suitable for communicating with a network as appropriate or desired.

The operational steps described in any of the exemplary aspects herein are described to provide examples and discussion. The steps may be performed by hardware components, may be embodied in machine-executable instructions to cause a processor to perform the steps, or may be performed by a combination of hardware and software. Although a specific order of method steps may be shown or described, the order of the steps may differ. In addition, two or more steps may be performed concurrently or with partial concurrence.

The embodiments herein can be applied in any type of vehicles such as wagons, motor vehicles e.g. motorcycles, cars, trucks, buses, railed vehicles e.g. trains, trams, watercraft e.g. ships, boats, amphibious vehicles e.g. screw-propelled vehicle, hovercraft, aircraft e.g. airplanes, helicopters, aerostat and spacecraft etc.

It is to be understood that the present invention is not limited to the embodiments described above and illustrated in the drawings; rather, the skilled person will recognize that many changes and modifications may be made within the scope of the appended claims.

## Claims

1. A method performed by an onboard electronic control unit (111) in a vehicle (110) for managing message transmissions between the vehicle (110) and an off-board system (120), the method comprising:
communicating (210) a first fragment (F1) of a message (170) between the vehicle (110) and the off-board system (120) via a first communication channel (Ch1), the first communication channel (Ch1) having a first throughput (151), a first transfer rate (152), a first latency (153), a first path loss ratio (154), and a first inter-packet delay variation (155);
detecting (220), by the vehicle, availability of a second communication channel (Ch2), the second communication channel (Ch2) having at least one of a second throughput (161) higher than the first throughput (151), a second transfer rate (162) greater than the first transfer rate (161), a second latency (163) less than the first latency (153), a second path loss ratio (164) less than the first path loss ratio (154), or a second inter-packet delay variation (165) less than the first inter-packet delay variation (155); and
communicating (240) a second fragment (F2) of the message (170) between the vehicle (110) and the off-board system (120) via the second communication channel (Ch2).

2. The method of claim 1, wherein communicating (210) the first fragment (F1) of the message (170) between the vehicle (110) and the off-board system (120) via the first communication channel (Ch1) comprises:
receiving (211), by the vehicle (110), the first fragment (F1) of the message (170) from the off-board system (120); and the method further comprises:
transmitting (230), by the vehicle (110), a notification (Ntf) to the off-board system (120) to notify that the second communication channel (Ch2) is available to use; and
wherein communicating (240) the second fragment (F2) of the message (170) between the vehicle (110) and the off-board system (120) via the second communication channel (Ch2) comprises:
receiving (241), by the vehicle (110), the second fragment (F2) of the message (170) from the off-board system (120) via the second communication channel (Ch2).

3. The method of claim 1, wherein communicating (210) the first fragment (F1) of the message (170) between the vehicle (110) and the off-board system (120) via the first communication channel (Ch1) further comprises:
transmitting (212), by the vehicle (110), the first fragment (F1) of the message (170) to the off-board system (120); and the method further comprises:
managing (232) message queues by moving a second fragment (F2) of the message (170) from a first queue of messages for transmission via the first communication channel (Ch1) to a second queue of messages for transmission via the second communication channel (Ch2); and
wherein communicating (240) the second fragment (F2) of the message between the vehicle (110) and the off-board system (120) via the second communication channel (Ch2) comprises:
transmitting (242) the second fragment (F2) of the message (170) via the second communication channel (Ch2).

4. The method according to any one of claims 1-3, further comprising determining (231) at least one message or one fragment (F2, F3... Fn) of a message that is queued for transmission over the first communication channel (Ch1) based on segmentation information of the queued messages, wherein the segmentation information of the queued messages comprises whether a message is segmented, and if a message is segmented and how many fragments of a message that is segmented into.

5. The method according to claim 2, wherein transmitting (230) a notification to the off-board system (120) comprises sending a maximum number of notifications during an interval, wherein the maximum number of notifications and interval are configurable.

6. A method performed by an off-board system (120) for managing message transmissions between a vehicle (110) and the off-board system (120), the method comprising:
transmitting (310) by the off-board system (120), a first fragment (F1) of a message (170) to the vehicle (110) via a first communication channel (Ch1);
receiving (320) a notification (Ntf) from the vehicle (110) indicating that a second communication channel (Ch2) is available to use;
managing (340) message queues by moving a second fragment (F2) of the message (170) from the queue of messages for transmission via the first communication channel (Ch1) to the queue of messages for transmission via the second communication channel (Ch2); and
transmitting (350) the second fragment (F2) of a message to the vehicle (110) via the second communication channel (Ch2).

7. The method according to claim 6, further comprising determining (330) at least one message or one fragment (F2, F3, ...Fn) of a message that is queued for transmission over the first communication channel (Ch1) based on segmentation information of the queued messages, wherein the segmentation information of the queued messages comprises whether a message is segmented, and if a message is segmented and how many fragments of a message that is segmented into.

8. An onboard electronic control unit (111) comprised in a vehicle (110) for managing message transmissions between the vehicle (110) and an off-board system (120), the onboard electronic control unit (111) is configured to:
communicate a first fragment (F1) of a message (170) between the vehicle (110) and the off-board system (120) via a first communication channel (Ch1), the first communicating channel (Ch1) having a first throughput (151), a first transfer rate (152), a first latency (153), a first path loss ratio (154), and a first inter-packet delay variation (155);
detect by the vehicle (110), availability of a second communication channel (Ch2), the second communication channel (Ch2) having at least one of a second throughput (161) higher than the first throughput (151), a second transfer rate (162) greater than the first transfer rate (152), a second latency (163) less than the first latency (153), a second path loss ratio (164) less than the first path loss ratio (154), or a second inter-packet delay variation (165) less than the first inter-packet delay variation (155); and
communicate a second fragment (F2) of the message (170) between the vehicle (110) and the off-board system (120) via the second communication channel (Ch2).

9. The onboard electronic control unit (111) of claim 8, wherein the onboard electronic control unit (111) is configured to communicate the first fragment (F1) of the message (170) between the vehicle and the off-board system via the first communication channel (Ch1) by being configured to:
receive, by the vehicle (110), the first fragment (F1) of the message (170) from the off-board system (120); and the the onboard electronic control unit (110) is further configured to:
transmit, by the vehicle (110), a notification to the off-board system (120) to notify that the second communication channel (Ch2) is available to use; and
wherein the onboard electronic control unit (111) is configured to communicate a second fragment (F2) of the message (170) between the vehicle (110) and the off-board system (120) via the second communication channel (Ch2) by being configured to:
receive, by the vehicle (110), the second fragment (F2) of the message from the off-board system (120) via the second communication channel Ch2).

10. The onboard electronic control unit (111) of claim 8, wherein the onboard electronic control unit (111) is configured to communicate the first fragment (F1) of the message between the vehicle (110) and the off-board system (120) via the first communication channel (Ch1) by being configured to:
transmit, by the vehicle (110), the first fragment (F1) of the message (170) to the off-board system (120); and the onboard electronic control unit (111) is further configured to:
manage message queues by moving a second fragment (F2) of the message from a first queue of messages for transmission via the first communication channel (Ch1) to a second queue of messages for transmission via the second communication channel (Ch2); and
wherein the onboard electronic control unit (111) is configured to communicate a second fragment (F2) of the message between the vehicle (110) and the off-board system (120) via the second communication channel (Ch2) by being configured to:
transmit the second fragment (F2) of the message via the second communication channel (Ch2).

11. The onboard electronic control unit (111) according to any one of claims 8-10, is further configured to determine at least one message or one fragment (F2, F3,... Fn) of a message that is queued for transmission over the first communication channel (Ch1) based on segmentation information of the queued messages, wherein the segmentation information of the queued messages comprises whether a message is segmented, and if a message is segmented and how many fragments of a message that is segmented into.

12. An off-board system (120) for managing message transmissions between a vehicle (110) and the off-board system (120), the off-board system (120) is configured to:
transmit a first fragment (F1) of a message (170) to the vehicle (110) via a first communication channel (Ch1);
receive a notification from the vehicle (110) indicating that a second communication channel (Ch2) is available to use;
manage message queues by moving a second fragment (F2) of the message (170) from the queue of messages for transmission via the first communication channel (Ch1) to the queue of messages for transmission via the second communication channel (Ch2); and
transmit the second fragment (F2) of a message (170) to the vehicle (110) via the second communication channel (Ch2).

13. The off-board system (120) according to claim 12, is further configured to determine at least one message or one fragment (F2) of a message that is queued for transmission over the first communication channel (Ch1) based on segmentation information of the queued messages, wherein the segmentation information of the queued messages comprises whether a message is segmented, and if a message is segmented and how many fragments of a message that is segmented into.

14. A vehicle (110) comprises an onboard electronic control unit (111) according to any claims 8-11.

15. A computer program product (460, 620) comprising program code (470) for performing, when executed by a processor (430, 602), the method of any of claims 1-5.

16. A computer program product (540, 620) comprising program code (550) for performing, when executed by a processor (520,602), the method of any of claims 6-7.

## Patentansprüche

1. Verfahren, das von einer bordeigenen elektronischen Steuereinheit (111) in einem Fahrzeug (110) zum Verwalten von Nachrichtenübertragungen zwischen dem Fahrzeug (110) und einem Off-Board-System (120) durchgeführt wird, wobei das Verfahren umfasst:
Kommunizieren (210) eines ersten Fragments (F1) einer Nachricht (170) zwischen dem Fahrzeug (110) und dem Off-Board-System (120) über einen ersten Kommunikationskanal (Ch1), wobei der erste Kommunikationskanal (Ch1) einen ersten Durchsatz (151), eine erste Transfergeschwindigkeit (152), eine erste Latenz (153), ein erstes Pfadverlustverhältnis (154) und eine erste Interpaketverzögerungsvariation (155) aufweist;
Erfassen (220), durch das Fahrzeug, einer Verfügbarkeit eines zweiten Kommunikationskanals (Ch2), wobei der zweite Kommunikationskanal (Ch2) mindestens eines von einem zweiten Durchsatz (161), der höher als der erste Durchsatz (151) ist, einer zweiten Transfergeschwindigkeit (162), die größer als die erste Transfergeschwindigkeit (161) ist, einer zweiten Latenz (163), die geringer als die erste Latenz (153) ist, einem zweiten Pfadverlustverhältnis (164), das geringer als das erste Pfadverlustverhältnis (154) ist, oder einer zweiten Interpaketverzögerungsvariation (165), die geringer als die erste Interpaketverzögerungsvariation (155) ist, aufweist; und
Kommunizieren (240) eines zweiten Fragments (F2) der Nachricht (170) zwischen dem Fahrzeug (110) und dem Off-Board-System (120) über den zweiten Kommunikationskanal (Ch2).

2. Verfahren nach Anspruch 1, wobei Kommunizieren (210) des ersten Fragments (F1) der Nachricht (170) zwischen dem Fahrzeug (110) und dem Off-Board-System (120) über den ersten Kommunikationskanal (Ch1) umfasst:
Empfangen (211), durch das Fahrzeug (110), des ersten Fragments (F1) der Nachricht (170) vom Off-Board-System (120); und das Verfahren weiter umfasst:
Übertragen (230), durch das Fahrzeug (110), einer Meldung (Ntf) an das Off-Board-System (120), um zu melden, dass der zweite Kommunikationskanal (Ch2) zum Gebrauch zur Verfügung steht; und
wobei Kommunizieren (240) des zweiten Fragments (F2) der Nachricht (170) zwischen dem Fahrzeug (110) und dem Off-Board-System (120) über den zweiten Kommunikationskanal (Ch2) umfasst:
Empfangen (241), durch das Fahrzeug (110), des zweiten Fragments (F2) der Nachricht (170) vom Off-Board-System (120) über den zweiten Kommunikationskanal (Ch2).

3. Verfahren nach Anspruch 1, wobei Kommunizieren (210) des ersten Fragments (F1) der Nachricht (170) zwischen dem Fahrzeug (110) und dem Off-Board-System (120) über den ersten Kommunikationskanal (Ch1) weiter umfasst:
Übertragen (212), durch das Fahrzeug (110), des ersten Fragments (F1) der Nachricht (170) an das Off-Board-System (120); und das Verfahren weiter umfasst:
Verwalten (232) von Nachrichtenwarteschlangen durch Bewegen eines zweiten Fragments (F2) der Nachricht (170) von einer ersten Nachrichtenwarteschlange zur Übertragung über den ersten Kommunikationskanal (Ch1) an eine zweite Nachrichtenwarteschlange zur Übertragung über den zweiten Kommunikationskanal (Ch2); und
wobei Kommunizieren (240) des zweiten Fragments (F2) der Nachricht zwischen dem Fahrzeug (110) und dem Off-Board-System (120) über den zweiten Kommunikationskanal (Ch2) umfasst:
Übertragen (242) des zweiten Fragments (F2) der Nachricht (170) über den zweiten Kommunikationskanal (Ch2).

4. Verfahren nach einem der Ansprüche 1-3, weiter umfassend Bestimmen (231) mindestens einer Nachricht oder eines Fragments (F2, F3...Fn) einer Nachricht, die zur Übertragung über den ersten Kommunikationskanal (Ch1) in der Warteschlange steht, auf Basis von Segmentierungsinformationen der in der Warteschlange stehenden Nachrichten, wobei die Segmentierungsinformationen der in der Warteschlange stehenden Nachrichten umfassen, ob eine Nachricht segmentiert ist, und ob eine Nachricht segmentiert ist und in wie viele Fragmente eine Nachricht segmentiert ist.

5. Verfahren nach Anspruch 2, wobei Übertagen (230) einer Meldung an das Off-Board-System (120) umfasst, eine maximale Anzahl von Meldungen während eines Intervalls zu senden, wobei die maximale Anzahl von Meldungen und das Intervall konfigurierbar sind.

6. Verfahren, das von einem Off-Board-System (120) zum Verwalten von Nachrichtenübertragungen zwischen einem Fahrzeug (110) und dem Off-Board-System (120) durchgeführt wird, wobei das Verfahren umfasst:
Übertragen (310), durch das Off-Board-System (120), eines ersten Fragments (F1) einer Nachricht (170) an das Fahrzeug (110) über einen ersten Kommunikationskanal (Ch1):
Empfangen (320) einer Meldung (Ntf) vom Fahrzeug (110), die angibt, dass ein zweiter Kommunikationskanal (Ch2) zum Gebrauch zur Verfügung steht;
Verwalten (340) von Nachrichtenwarteschlangen durch Bewegen eines zweiten Fragments (F2) der Nachricht (170) von der Nachrichtenwarteschlange zur Übertragung über den ersten Kommunikationskanal (Ch1) an die Nachrichtenwarteschlange zur Übertragung über den zweiten Kommunikationskanal (Ch2); und
Übertragen (350) des zweiten Fragments (F2) einer Nachricht über den zweiten Kommunikationskanal (Ch2) an das Fahrzeug (110).

7. Verfahren nach Anspruch 6, weiter umfassend Bestimmen (330) mindestens einer Nachricht oder eines Fragments (F2, F3, ... Fn) einer Nachricht, die zur Übertragung über den ersten Kommunikationskanal (Ch1) in der Warteschlange steht, auf Basis von Segmentierungsinformationen der in der Warteschlange stehenden Nachrichten, wobei die Segmentierungsinformationen der in der Warteschlange stehenden Nachrichten umfassen, ob eine Nachricht segmentiert ist, und ob eine Nachricht segmentiert ist und in wie viele Fragmente eine Nachricht segmentiert ist.

8. Bordeigene elektronische Steuereinheit (111), die in einem Fahrzeug (110) umfasst ist, zum Verwalten von Nachrichtenübertragungen zwischen dem Fahrzeug (110) und einem Off-Board-System (120), wobei die bordeigene elektronische Steuereinheit (111) konfiguriert ist zum:
Kommunizieren eines ersten Fragments (F1) einer Nachricht (170) zwischen dem Fahrzeug (110) und dem Off-Board-System (120) über einen ersten Kommunikationskanal (Ch1), wobei der erste Kommunikationskanal (Ch1) einen ersten Durchsatz (151), eine erste Transfergeschwindigkeit (152), eine erste Latenz (153), ein erstes Pfadverlustverhältnis (154) und eine erste Interpaketverzögerungsvariation (155) aufweist;
Erfassen, durch das Fahrzeug (110), einer Verfügbarkeit eines zweiten Kommunikationskanals (Ch2), wobei der zweite Kommunikationskanal (Ch2) mindestens eines von einem zweiten Durchsatz (161), der höher als der erste Durchsatz (151) ist, einer zweiten Transfergeschwindigkeit (162), die größer als die erste Transfergeschwindigkeit (152) ist, einer zweiten Latenz (163), die geringer als die erste Latenz (153) ist, einem zweiten Pfadverlustverhältnis (164), das geringer als das erste Pfadverlustverhältnis (154) ist, oder einer zweiten Interpaketverzögerungsvariation (165), die geringer als die erste Interpaketverzögerungsvariation (155) ist, aufweist; und
Kommunizieren eines zweiten Fragments (F2) der Nachricht (170) zwischen dem Fahrzeug (110) und dem Off-Board-System (120) über den zweiten Kommunikationskanal (Ch2).

9. Bordeigene elektronische Steuereinheit (111) nach Anspruch 8, wobei die bordeigene elektronische Steuereinheit (111) dazu konfiguriert ist, das ersten Fragment (F1) der Nachricht (170) zwischen dem Fahrzeug und dem Off-Board-System über den ersten Kommunikationskanal (Ch1) zu kommunizieren, indem sie konfiguriert ist zum:
Empfangen, durch das Fahrzeug (110), des ersten Fragments (F1) der Nachricht (170) vom Off-Board-System (120); und die bordeigene elektronische Steuereinheit (110) weiter konfiguriert ist zum:
Übertragen, durch das Fahrzeug (110), einer Meldung an das Off-Board-System (120), um zu melden, dass der zweite Kommunikationskanal (Ch2) zum Gebrauch zur Verfügung steht; und
wobei die bordeigene elektronische Steuereinheit (111) dazu konfiguriert ist, ein zweites Fragment (F2) der Nachricht (170) zwischen dem Fahrzeug (110) und dem Off-Board-System (120) über den zweiten Kommunikationskanal (Ch2) zu kommunizieren, indem sie konfiguriert ist zum:
Empfangen, durch das Fahrzeug (110), des zweiten Fragments (F2) der Nachricht vom Off-Board-System (120) über den zweiten Kommunikationskanal (Ch2).

10. Bordeigene elektronische Steuereinheit (111) nach Anspruch 8, wobei die bordeigene elektronische Steuereinheit (111) dazu konfiguriert ist, das ersten Fragment (F1) der Nachricht zwischen dem Fahrzeug (110) und dem Off-Board-System (120) über den ersten Kommunikationskanal (Ch1) zu kommunizieren, indem sie konfiguriert ist zum:
Übertragen, durch das Fahrzeug (110), des ersten Fragments (F1) der Nachricht (170) an das Off-Board-System (120); und die bordeigene elektronische Steuereinheit (111) weiter konfiguriert ist zum:
Verwalten von Nachrichtenwarteschlangen durch Bewegen eines zweiten Fragments (F2) der Nachricht von einer ersten Nachrichtenwarteschlange zur Übertragung über den ersten Kommunikationskanal (Ch1) an eine zweite Nachrichtenwarteschlange zur Übertragung über den zweiten Kommunikationskanal (Ch2); und
wobei die bordeigene elektronische Steuereinheit (111) dazu konfiguriert ist, ein zweites Fragment (F2) der Nachricht zwischen dem Fahrzeug (110) und dem Off-Board-System (120) über den zweiten Kommunikationskanal (Ch2) zu kommunizieren, indem sie konfiguriert ist zum:
Übertragen des zweiten Fragments (F2) der Nachricht über den zweiten Kommunikationskanal (Ch2).

11. Bordeigene elektronische Steuereinheit (111) nach einem der Ansprüche 8-10, die weiter konfiguriert ist zum Bestimmen mindestens einer Nachricht oder eines Fragments (F2, F3, ... Fn) einer Nachricht, die zur Übertragung über den ersten Kommunikationskanal (Ch1) in der Warteschlange steht, auf Basis von Segmentierungsinformationen der in der Warteschlange stehenden Nachrichten, wobei die Segmentierungsinformationen der in der Warteschlange stehenden Nachrichten umfassen, ob eine Nachricht segmentiert ist, und ob eine Nachricht segmentiert ist und in wie viele Fragmente eine Nachricht segmentiert ist.

12. Off-Board-System (120) zum Verwalten von Nachrichtenübertragungen zwischen einem Fahrzeug (110) und dem Off-Board-System (120), wobei das Off-Board-System (120) konfiguriert ist zum:
Übertragen eines ersten Fragments (F1) einer Nachricht (170) an das Fahrzeug (110) über den ersten Kommunikationskanal (Ch1):
Empfangen einer Meldung vom Fahrzeug (110), die angibt, dass ein zweiter Kommunikationskanal (Ch2) zum Gebrauch zur Verfügung steht;
Verwalten von Nachrichtenwarteschlangen durch Bewegen eines zweiten Fragments (F2) der Nachricht (170) von der Nachrichtenwarteschlange zur Übertragung über den ersten Kommunikationskanal (Ch1) an die Nachrichtenwarteschlange zur Übertragung über den zweiten Kommunikationskanal (Ch2); und
Übertragen des zweiten Fragments (F2) einer Nachricht (170) an das Fahrzeug (110) über den zweiten Kommunikationskanal (Ch2).

13. Off-Board-System (120) nach Anspruch 12, das weiter konfiguriert ist zum Bestimmen mindestens einer Nachricht oder eines Fragments (F2) einer Nachricht, die zur Übertragung über den ersten Kommunikationskanal (Ch1) in der Warteschlange steht, auf Basis von Segmentierungsinformationen der in der Warteschlange stehenden Nachrichten, wobei die Segmentierungsinformationen der in der Warteschlange stehenden Nachrichten umfassen, ob eine Nachricht segmentiert ist, und ob eine Nachricht segmentiert ist und in wie viele Fragmente eine Nachricht segmentiert ist.

14. Fahrzeug (110), umfassend eine bordeigene elektronische Steuereinheit (111) nach einem der Ansprüche 8-11.

15. Computerprogrammprodukt (460, 620), umfassend Programmcode (470) zum Durchführen des Verfahrens nach einem der Ansprüche 1-5, wenn er von einem Prozessor (430, 602) ausgeführt wird.

16. Computerprogrammprodukt (540, 620), umfassend Programmcode (550) zum Durchführen des Verfahrens nach einem der Ansprüche 6-7, wenn er von einem Prozessor (520, 602) ausgeführt wird.

## Revendications

1. Procédé mis en œuvre par une unité de commande électronique transportée (111) dans un véhicule (110) pour gérer des transmissions de message entre le véhicule (110) et un système non transporté (120), le procédé comprenant :
la communication (210) d'un premier fragment (F1) d'un message (170) entre le véhicule (110) et le système non transporté (120) via un premier canal de communication (Ch1), le premier canal de communication (Ch1) présentant un premier débit (151), un premier taux de transfert (152), une première latence (153), un premier rapport de perte de chemin (154), et une première variation de retard inter-paquet (155) ;
la détection (220), par le véhicule, de la disponibilité d'un deuxième canal de communication (Ch2), le deuxième canal de communication (Ch2) présentant au moins l'un parmi un deuxième débit (161) plus élevé que le premier débit (151), un deuxième taux de transfert (162) plus élevé que le premier taux de transfert (161), une deuxième latence (163) inférieure à la première latence (153), un deuxième rapport de perte de chemin (164) inférieur au premier rapport de perte de chemin (154), ou une deuxième variation de retard inter-paquet (165) inférieure à la première variation de retard inter-paquet (155) ; et
la communication (240) d'un deuxième fragment (F2) du message (170) entre le véhicule (110) et le système non transporté (120) via le deuxième canal de communication (Ch2).

2. Procédé selon la revendication 1, dans lequel la communication (210) du premier fragment (F1) du message (170) entre le véhicule (110) et le système non transporté (120) via le premier canal de communication (Ch1) comprend :
la réception (211), par le véhicule (110), du premier fragment (F1) du message (170) en provenance du système non transporté (120) ; et le procédé comprend en outre :
la transmission (230), par le véhicule (110), d'une notification (Ntf) au système non transporté (120) pour notifier que le deuxième canal de communication (Ch2) est disponible pour être utilisé ; et
dans lequel la communication (240) du deuxième fragment (F2) du message (170) entre le véhicule (110) et le système non transporté (120) via le deuxième canal de communication (Ch2) comprend :
la réception (241), par le véhicule (110), du deuxième fragment (F2) du message (170) en provenance du système non transporté (120) via le deuxième canal de communication (Ch2).

3. Procédé selon la revendication 1, dans lequel la communication (210) du premier fragment (F1) du message (170) entre le véhicule (110) et le système non transporté (120) via le premier canal de communication (Ch1) comprend en outre :
la transmission (212), par le véhicule (110), du premier fragment (F1) du message (170) au système non transporté (120) ; et le procédé comprend en outre :
la gestion (232) de files d'attente de messages en déplaçant un deuxième fragment (F2) du message (170) depuis une première file d'attente de messages pour transmission via le premier canal de communication (Ch1) vers une deuxième file d'attente de messages pour transmission via le deuxième canal de communication (Ch2) ; et
dans lequel la communication (240) du deuxième fragment (F2) du message entre le véhicule (110) et le système non transporté (120) via le deuxième canal de communication (Ch2) comprend :
la transmission (242) du deuxième fragment (F2) du message (170) via le deuxième canal de communication (Ch2).

4. Procédé selon l'une quelconque des revendications 1 à 3, comprenant en outre la détermination (231) d'au moins un message ou un fragment (F2, F3...Fn) d'un message qui est mis en file d'attente pour transmission sur le premier canal de communication (Ch1) sur la base d'informations de segmentation des messages mis en file d'attente, dans lequel les informations de segmentation des messages mis en file d'attente comprennent le fait de savoir si un message est segmenté, et si un message est segmenté et le nombre de fragments en lesquels un message est segmenté.

5. Procédé selon la revendication 2, dans lequel la transmission (230) d'une notification au système non transporté (120) comprend l'envoi d'un nombre maximum de notifications pendant un intervalle, dans lequel le nombre maximum de notifications et l'intervalle sont configurables.

6. Procédé mis en œuvre par un système non transporté (120) pour gérer des transmissions de message entre un véhicule (110) et le système non transporté (120), le procédé comprenant :
la transmission (310), par le système non transporté (120), d'un premier fragment (F1) d'un message (170) au véhicule (110) via un premier canal de communication (Ch1) ;
la réception (320) d'une notification (Ntf) provenant du véhicule (110) indiquant qu'un deuxième canal de communication (Ch2) est disponible pour être utilisé ;
la gestion (340) de files d'attente de messages en déplaçant un deuxième fragment (F2) du message (170) depuis la file d'attente de messages pour transmission via le premier canal de communication (Ch1) vers la file d'attente de messages pour transmission via le deuxième canal de communication (Ch2) ; et
la transmission (350) du deuxième fragment (F2) d'un message au véhicule (110) via le deuxième canal de communication (Ch2).

7. Procédé selon la revendication 6, comprenant en outre la détermination (330) d'au moins un message ou un fragment (F2, F3,... Fn) d'un message qui est mis en file d'attente pour transmission sur le premier canal de communication (Ch1) sur la base d'informations de segmentation des messages mis en file d'attente, dans lequel les informations de segmentation des messages mis en file d'attente comprennent le fait de savoir si un message est segmenté, et si un message est segmenté et le nombre de fragments en lesquels un message est segmenté.

8. Unité de commande électronique transportée (111) comprise dans un véhicule (110) pour gérer des transmissions de message entre le véhicule (110) et un système non transporté (120), l'unité de commande électronique transportée (111) est configurée pour :
communiquer un premier fragment (F1) d'un message (170) entre le véhicule (110) et le système non transporté (120) via un premier canal de communication (Ch1), le premier canal de communication (Ch1) présentant un premier débit (151), un premier taux de transfert (152), une première latence (153), un premier rapport de perte de chemin (154), et une première variation de retard inter-paquet (155) ;
détecter, par le véhicule (110), la disponibilité d'un deuxième canal de communication (Ch2), le deuxième canal de communication (Ch2) présentant au moins l'un parmi un deuxième débit (161) plus élevé que le premier débit (151), un deuxième taux de transfert (162) plus élevé que le premier taux de transfert (152), une deuxième latence (163) inférieure à la première latence (153), un deuxième rapport de perte de chemin (164) inférieur au premier rapport de perte de chemin (154), ou une deuxième variation de retard inter-paquet (165) inférieure à la première variation de retard inter-paquet (155) ; et
communiquer un deuxième fragment (F2) du message (170) entre le véhicule (110) et le système non transporté (120) via le deuxième canal de communication (Ch2).

9. Unité de commande électronique transportée (111) selon la revendication 8, dans laquelle l'unité de commande électronique transportée (111) est configurée pour communiquer le premier fragment (F1) du message (170) entre le véhicule et le système non transporté via le premier canal de communication (Ch1) en étant configurée pour :
recevoir, par le véhicule (110), le premier fragment (F1) du message (170) en provenance du système non transporté (120) ; et l'unité de commande électronique transportée (110) est en outre configurée pour :
transmettre, par le véhicule (110), une notification au système non transporté (120) pour notifier que le deuxième canal de communication (Ch2) est disponible pour être utilisé ; et
dans laquelle l'unité de commande électronique transportée (111) est configurée pour communiquer un deuxième fragment (F2) du message (170) entre le véhicule (110) et le système non transporté (120) via le deuxième canal de communication (Ch2) en étant configurée pour :
recevoir, par le véhicule (110), le deuxième fragment (F2) du message en provenance du système non transporté (120) via le deuxième canal de communication (Ch2).

10. Unité de commande électronique transportée (111) selon la revendication 8, dans laquelle l'unité de commande électronique transportée (111) est configurée pour communiquer le premier fragment (F1) du message entre le véhicule (110) et le système non transporté (120) via le premier canal de communication (Ch1) en étant configurée pour :
transmettre, par le véhicule (110), le premier fragment (F1) du message (170) au système non transporté (120) ; et l'unité de commande électronique transportée (111) est en outre configurée pour :
gérer des files d'attente de messages en déplaçant un deuxième fragment (F2) du message depuis une première file d'attente de messages pour transmission via le premier canal de communication (Ch1) vers une deuxième file d'attente de messages pour transmission via le deuxième canal de communication (Ch2) ; et
dans laquelle l'unité de commande électronique transportée (111) est configurée pour communiquer un deuxième fragment (F2) du message entre le véhicule (110) et le système non transporté (120) via le deuxième canal de communication (Ch2) en étant configurée pour :
transmettre le deuxième fragment (F2) du message via le deuxième canal de communication (Ch2).

11. Unité de commande électronique transportée (111) selon l'une quelconque des revendications 8 à 10, est en outre configurée pour déterminer au moins un message ou un fragment (F2, F3,... Fn) d'un message qui est mis en file d'attente pour transmission sur le premier canal de communication (Ch1) sur la base d'informations de segmentation des messages mis en file d'attente, dans laquelle les informations de segmentation des messages mis en file d'attente comprennent le fait de savoir si un message est segmenté, et si un message est segmenté et le nombre de fragments en lesquels un message est segmenté.

12. Système non transporté (120) pour gérer des transmissions de message entre un véhicule (110) et le système non transporté (120), le système non transporté (120) est configuré pour :
transmettre un premier fragment (F1) d'un message (170) au véhicule (110) via un premier canal de communication (Ch1) ;
recevoir une notification provenant du véhicule (110) indiquant qu'un deuxième canal de communication (Ch2) est disponible pour être utilisé ;
gérer des files d'attente de messages en déplaçant un deuxième fragment (F2) du message (170) depuis la file d'attente de messages pour transmission via le premier canal de communication (Ch1) vers la file d'attente de messages pour transmission via le deuxième canal de communication (Ch2) ; et
transmettre le deuxième fragment (F2) d'un message (170) au véhicule (110) via le deuxième canal de communication (Ch2).

13. Système non transporté (120) selon la revendication 12, est en outre configuré pour déterminer au moins un message ou un fragment (F2) d'un message qui est mis en file d'attente pour transmission sur le premier canal de communication (Ch1) sur la base d'informations de segmentation des messages mis en file d'attente, dans lequel les informations de segmentation des messages mis en file d'attente comprennent le fait de savoir si un message est segmenté, et si un message est segmenté et le nombre de fragments en lesquels un message est segmenté.

14. Véhicule (110) comprenant une unité de commande électronique transportée (111) selon l'une quelconque des revendications 8 à 11.

15. Produit de programme informatique (460, 620) comprenant un code de programme (470) pour mettre en œuvre, lorsqu'il est mis en œuvre par un processeur (430, 602), le procédé selon l'une quelconque des revendications 1 à 5.

16. Produit de programme informatique (540, 620) comprenant un code de programme (550) pour mettre en œuvre, lorsqu'il est mis en œuvre par un processeur (520, 602), le procédé selon l'une quelconque des revendications 6 à 7.
